# EUROPÄISCHE PATENTSCHRIFT

(11) **EP 0 821 170 B1**
(45) Veröffentlichungstag und Bekanntmachung des Hinweises auf die Patenterteilung: **18.09.2002**
(21) Anmeldenummer: 97110007.8
(22) Anmeldetag: 19.06.1997
(51) Int. Cl.: F16C 23/04, H02K 5/167

(54) **Elektrokleinmotor**
Electric micromotor
Micromoteur électrique

(30) Priorität: 23.07.1996 DE 19629596
(43) Veröffentlichungstag der Anmeldung: 28.01.1998
(73) Patentinhaber: ROBERT BOSCH GMBH, 70442 Stuttgart (DE)
(72) Erfinder: Lungu, Corneliu, Dipl.-Ing., 77830 Bühlertal (DE)

(56) Entgegenhaltungen:
- EP-A- 0 171 587
- EP-A- 0 545 692
- DE-A- 1 808 533
- FR-A- 2 305 635
- GB-A- 2 060 091
- US-A- 3 714 705
- US-A- 3 728 563

## Beschreibung

### Stand der Technik

Die Erfindung geht aus von einem Elektrokleinmotor, insbesondere einem Kommutatormotor, der im Oberbegriff des Anspruchs 1 definierten Gattung und von einem Verfahren zur Montage eines Gleitlages auf einer Motorwelle einer Kommutatormotors gemäß dem Oberbegriff der Anspruchs 14.

Bei einem bekannten Elektromotor dieser Art (US 3 714 705) wird das aus Sintermetall hergestellte Lagerelement mittels eines Haltekörpers am Lagerschild fixiert und die beiden topfartigen Kapselhälften am Haltekörper befestigt. Der Haltekörper weist eine gestufte Schalenform mit einem Zylinderabschnitt größeren Durchmessers und einem Zylinderabschnitt kleineren Durchmessers sowie mit einer an dem Zylinderabschnitt kleineren Durchmessers sich mittig fortsetzenden Vertiefung mit sehr viel kleinerem Durchmesser auf. Der Übergang von der Vertiefung zu dem Zylinderabschnitt mit kleinerem Durchmesser ist als konisch sich erweiternder Ringabschnitt abgebildet, der auf einem ebenso konischen Abschnitt des Lagerelements aufliegt und das Lagerelement über einen lose auf die Rotorwelle aufgeschobenen Abstandshalter am drehfest mit der Rotorwelle verbundenen Rotorblechpaket abstützt. Der Haltekörper ist in einen am Lagerschild ausgebildeten ringförmigen Kragen eingeschoben und mit seinem Zylinderabschnitt größeren Durchmessers, der paßgenau an der Innenfläche des Kragens anliegt, an diesem befestigt. Von den beiden Kapselhälften ist die vom Rotorblechpaket abgekehrte äußere auf den Zvlinderabschnitt des Haltekörpers mit dem kleineren Durchmesser aufgeschoben und dort befestigt, während die dem Rotorblechpaket nächstliegende innere Kapselhälfte in den Zylinderabschnitt des Haltekörpers mit dem größeren Durchmesser eingeschoben und an dessen Innenfläche befestigt ist. Der Zwischenraum zwischen dem Lagerelement und den beiden Kapselhälften ist mit mehreren Lagen von Dochtband ausgefüllt, das mit Schmieröl getränkt ist. Der Schleuderring ist auf der Rotorwelle festgeklemmt und sitzt innerhalb der Wellendurchtrittsöffnung der äußeren Gehäusekapsel.

Es ist bereits ein Kommutatormotor mit Gleitlager bekannt. bei dem ebenfalls das aus Sintermetall hergestellte Lagerelement mittels eines Haltekörpers am Lagerschild fixiert und die beiden topfartigen Kapselhälften am Haltekörper befestigt sind. An jeder Stirnseite des Lagerelements ist eine Schleuderscheibe drehfest auf der Rotorwelle angeordnet, wobei die eine Schleuderscheibe unter Belassung eines Axialspiels zum Lagerelement unmittelbar am Kommutator liegt und die andere Schleuderscheibe mittels einer auf der Rotorwelle festgesetzten Axialsicherung gegen Axialverschiebung gesichert ist. Die Axialsicherung besteht aus einer Stahlscheibe und einer verformbaren Weichkupferscheibe, wobei die Weichkupferscheibe sich zwischen der Stahlscheibe und der Schleuderscheibe abstützt und die Stahlscheibe sich durch eine entsprechend geformte, zentrale Scheibenöffnung auf der Rotorwelle "verkrallt". Auf der Innenfläche der beiden topfförmigen Kapselhälften und des Haltekörpers ist eine schmiermittelgetränkte Permawickmasse aufgebracht, die mit dem Außenumfang des Lagerelements in Kontakt steht.

### Vorteile der Erfindung

Der erfindungsdemäße Elektrokleinmotor, insbesondere Kommutatormotor, mit den Merkmalen des hennzeichnender Teils der Anspruchs 1 hat den Vorteil eines sehr kleinen Außendurchmessers des Gleitlagers, der bei Kommutatormotoren kleiner als der Außendurchmesser des Kommutators ist. Dadurch kann das Gleitlager komplett vormontiert und anschließend die vormontierte Baueinheit "Rotorwelle mit Gleitlager" durch die Bürstenhalter hindurchgeschoben werden. Dies wiederum eröffnet die Möglichkeit, auf eine eigenständige Bürstenplatine für die Kommutatorbürsten zu verzichten und die Bürstenhalter direkt am Lagerschild oder am Polrohr des Kleinmotors zu befestigen. Damit geht eine Geräuschreduzierung einher, da die Bürstenhalter jetzt an einer wesentlich trägeren Masse anliegen. Eine weitere Geräuschreduzierung ergibt sich dann, wenn zwischen den Bürstenhaltern und dem Lagerschild bzw. dem Polrohr zusätzlich eine schwingungsdämpfende Kunststoffschicht vorgesehen wird. Durch die erfindungsgemäß geschaffene Möglichkeit der Vormontage des Gleitlagers auf der Rotorwelle vor deren Einbau in den Stator kann die vormontierte Baueinheit Rotorwelle/Gleitlager auf Laufruhe geprüft und im Gleitlager das Axialspiel eingestellt werden. Der Kommutator kann bei in den eigenen Gleitlagern rotierender Rotorwelle feingedreht werden, so daß jede Unrundheit und Unwucht vermieden wird. Dies alles erleichtert die Montage und läßt die Montagezeit und die Fertigungskosten sinken.

Das erfindungsgemäße Gleitlager zeigt keinen Schmiermittelaustritt, so daß der Kommutator vor Verpastung geschützt ist. Durch weitergehende konstruktive Maßnahmen innerhalb der Lagerkapsel werden die Schmierparameter über die Lebensdauer des Gleitlagers weitgehend konstant gehalten und ein beständiger Ölfilm zwischen den Gleitflächen sichergestellt, was zu einer großen Laufruhe führt. Durch die geringe Entfernung des Lagerelements von dem Lagerschild ist eine gute Wärmeabfuhr sichergestellt. Das Gleitlager kann für verschiedene Motortypen gleichermaßen verwendet werden, so daß durch Großserien eine rationelle Fertigung möglich ist und die Fertigungskosten damit weiter sinken.

Durch die in den weiteren Ansprüchen aufgeführten Maßnahmen sind vorteilhafte Weiterbildungen und Verbesserungen des im Anspruch 1 angegebenen Elektrokleinmotors möglich.

Gemäß einer bevorzugten Ausführungsform der Erfindung ist die innere Kapselhälfte als ein am Umfang des Lagerelements aufliegender Klemmkäfig und die äußere Kapselhälfte als eine den Klemmkäfig kraftschlüssig an das Lagerelement andrückende Spannhülse ausgebildet, die unmittelbar am Lagerschild befestigt ist. Durch diese Ausbildung der Kapselhälften wird einerseits eine Zentrierung des Lagerelements und andererseits eine ausreichend kraftschlüssige Fixierung des Lagerelements gegen Radial- und Axialverschiebung gewährleistet. Die Montage des Gleitlagers erfolgt durch einfaches Aufschieben der beiden Kapselhälften und Festlegung der Spannhülse am Lagerschild, wozu gemäß einer vorteilhaften Ausführungsform der Erfindung der Lagerschild einen zentralen Zentrierkragen aufweist, der die Spannhülse in Radialrichtung formschlüssig aufnimmt, und die Spannhülse an ihrer Topföffnung mit einem Radialflansch versehen ist. der am Spannkragen mittels aus diesem ausbiegbarer Haltelappen gegen Drehung und Axialverschiebung festgelegt ist.

Das vortehend in Bezug auf Anspruch 1 beschreiben Erfindungs konzept findet auch Ausdruck in der Merkmalen der kennzeichnenden Teils des Anspruchs 14. Anspruch 15 definiert ferner eine beverzugte Ausführungsform der Verfahrens.

### Zeichnung

Die Erfindung ist anhand eines in der Zeichnung dargestellten Ausführungsbeispiels in der nachfolgenden Beschreibung näher erläutert. Es zeigen:
- Fig. 1: ausschnittweise einen Längsschnitt eines Kommutatormotors mit Rotorwelle, Kommutator und Gleitlager.
- Fig. 2: einen Längsschnitt eines Klemmkäfigs im Gleitlager gemäß Fig. 1.
- Fig. 3: eine Montagesituation einer Axialsicherung für den Motor gemäß Fig. 1.

### Beschreibung des Ausführungsbeispiels

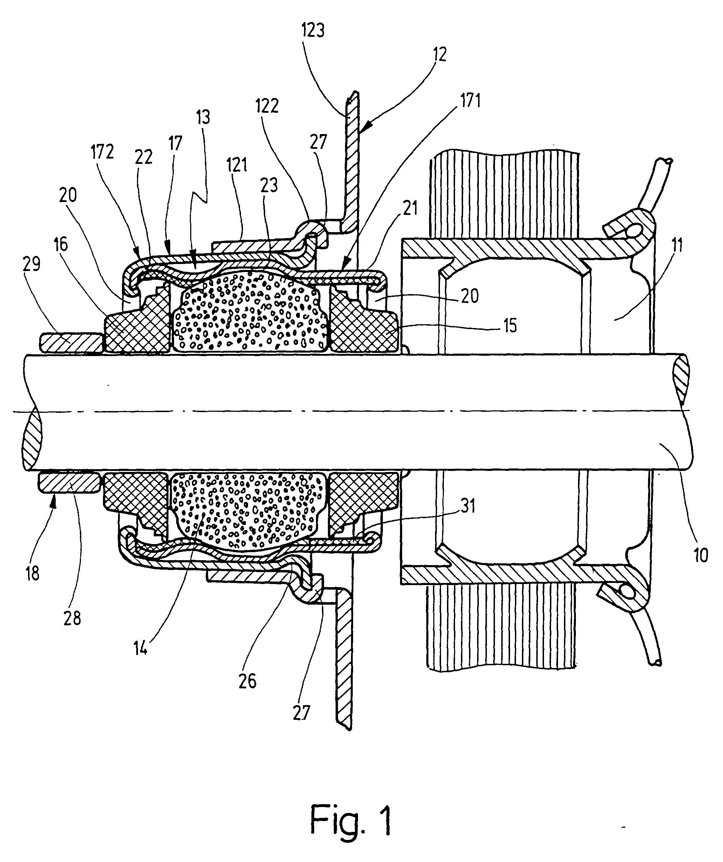

Der in Fig. 1 ausschnittweise im Längsschnitt dargestellte Kommutatormotor als Ausführungsbeispiel für einen Elektrokleinmotor weist eine Rotorwelle 10 mit einem darauf drehfest sitzenden Kommutator 11, einen Lagerschild 12 und ein zwischen Lagerschild 12 und Rotorwelle 10 angeordnetes Gleitlager 13 auf. Der Lagerschild 12 kann am Motorgehäuse oder am Polrohr oder am Getriebegehäuse oder an einen Getriebedeckel befestigt sein.

Das Gleitlager 13 weist ein die Rotorwelle 10 mit Lagerspiel aufnehmendes kalottenförmiges Lagerelement 14 aus Sintermetall, zwei an den Stirnseiten des Lagerelements 14 drehfest auf der Rotorwelle 10 sitzende Schleuderscheiben 15,16, eine das Lagerelement 14 und die Schleuderscheiben 15,16 umschließende Lagerkapsel 17 sowie eine drehfest auf der Rotorwelle 10 sitzende Axialsicherung 18 auf. Die aus zwei topfartigen Kapselhälften 171,172 bestehende mehrteilige Lagerkapsel 17 nimmt das Lagerelement 14 unmittelbar radial und axial unverschieblich auf und ist ihrerseits am Lagerschild 12 ebenfalls axial und radial unverschieblich festgelegt. Im Topfboden einer jeden Kapselhälfte 171,172 ist eine Wellendurchtrittsöffnung 19 bzw. 20 so ausgeschnitten, daß der Topfboden die Rotorwelle 10 mit Radialabstand ringförmig umschließt. Durch die Wellendurchtrittsöffnung 19 ragt die Schleuderscheibe 15 und durch die Wellendurchtrittsöffnung 20 die Schleuderscheibe 16 hindurch. Die Schleuderscheiben 15,16 weisen dabei einen Innendurchmesser auf, der etwas kleiner ist als der Außendurchmesser der Rotorwelle 10, so daß sie bei der Rotation der Rotorwelle 10 von dieser mitgenommen werden. Der Außendurchmesser der identisch ausgebildeten und spiegelsymmetrisch auf die Rotorwelle 10 aufgeschobenen Schleuderscheiben 15,16 ist gestuft, wobei der Abschnitt mit dem größten Außendurchmesser jeweils dem Lagerelement 14 zugekehrt ist. Der lichte Durchmesser der Wellendurchtrittsöffnungen 19,20 ist kleiner als der größte Außendurchmesser und größer als der kleinste Außendurchmesser der Schleuderscheiben 15,16 bemessen.

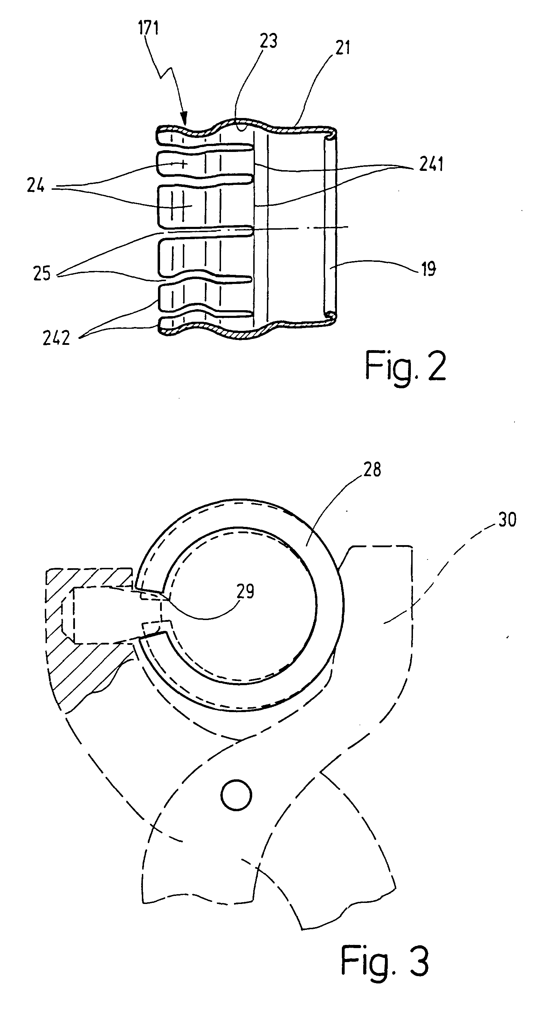

Die beiden Kapselhälften 171,172 sind kraft- und formschlüssig aufeinander aufschiebbar ausgebildet, wobei die innere Kapselhälfte 171 das Lagerelement 14 kraftschlüssig aufnimmt und die äußere Kapselhälfte 172 am Lagerschild 12 befestigt ist. Im einzelnen ist dabei die innere Kapselhälfte 171 als Klemmkäfig 21 ausgebildet, der am Umfang des Lagerelements 14 unmittelbar aufliegt, und die äußere Kapselhälfte 172 als eine den Klemmkäfig 21 kraftschlüssig auf das Lagerelement 14 aufdrückende Spannhülse 22 ausgebildet ist. Der in Fig. 2 im Längsschnitt dargestellte Klemmkäfig 21 ist aus federelastischem Material, z.B. Federblech, hergestellt und weist neben der Wellendurchtrittsöffnung 19 in seinem Topfboden in seiner zylinderförmigen Topfwand eine nach außen ausgeprägte umlaufende Ringmulde 23 sowie federnde Zungen 24 auf. Die Ringmulde 23 ist dabei so angeordnet, daß bei auf das Lagerelement 14 aufgeschobenem Klemmkäfig 21 ihre radiale Mitten- oder Svmmetrieebene etwa mit der des kalottenförmigen Lagerelements 14 zusammenfällt, so daß der Klemmkäfig 21 sich mit der Ringmulde 23 symmetrisch auf die Kalottenoberfläche aufdrückt und dadurch eine Zentrierung des Lagerelements 14 bewirkt. Die federnden Zungen 24 sind durch von der Topföffnung her eingebrachte Einschnitte 25 gebildet, die etwa bis in die radiale Symmetrieebene der Ringmulde 23 reichen, so daß hier der Zungengrund 241 der federnden Zungen 24 liegt. Die freien Zungenenden 242 der Zungen 24 sind nach außen ausgebogen. und zwar derart, daß der Durchmesser eines von den ausgebogenen Zungenenden 242 definierten Außenkreises etwa gleich dem Außendurchmesser des Klemmkäfigs 21 im Bereich der Ringmulde 23 ist.

Die topfförmige Spannhülse 22 weist neben der in ihrem Topfboden ausgeschnittenen Wellendurchtrittsöffnung 20 einen nahe ihres Topfbodens ausgebildeten, sich konisch verjüngenden Spannbereichs 221 und einen an ihrer Topföffnung angeordneten, nach außen abstehenden Radialflansch 222 auf. Der Innendurchmesser der Spannhülse 22 ist etwa gleich dem Außendurchmesser des Klemmkäfigs 21 im Bereich der Ringmulde 23 bemessen, so daß die Spannhülse 22 beim Aufschieben auf den Klemmkäfig 21 die Ringmulde 23 formschlüssig übergreift und sich mit seinem Spannbereich 221 auf die Zungenenden 242 aufschiebt. Durch den Spannbereich 221 werden die Zungen 24 zur Rotorwelle 11 hin gedrückt, wobei mit zunehmendem Aufschiebemaß der Spannhülse 22 auf den Klemmkäfig 21 eine stärkere Einspannung des Lagerelements 14 erreicht werden kann. Ist das gewünschte Aufschiebemaß der Spannhülse 22 erreicht. wird die Spannhülse 22 mittels eines Werkzeugs in ihrem in Aufschieberichtung hinter der Ringmulde 23 am Klemmkäfig 21 liegenden Bereich so eingedrückt oder eingeschnürt, daß sie an der in Aufschieberichtung der Spannhülse 22 rückwärtigen Außenfläche der Ringmulde 23 im wesentlichen formschlüssig anliegt. Diese ringförmige Einschnürung der Spannhülse 22 ist in Fig. 1 mit 26 gekennzeichnet.

Zur Festlegung der Spannhülse 22 am Lagerschild 12 ist der Lagerschild 12 mit einem koaxialen ringförmigen Kragen 121 ausgestattet, der über einen Ringabsatz 122 größeren Durchmessers einstückig in einen radial ausgerichteten Flansch 123 übergeht. Der Innendurchmesser des ringförmigen Kragens 121 ist geringfügig größer bemessen als der Außendurchmesser der Spannhülse 22, so daß diese in Radialrichtung weitgehend formschlüssig in den Kragen 121 einschiebbar ist. Im Ringabsatz 122 des Lagerschilds 12 sind über den Umfang gleichmäßig verteilte Haltelappen 27 ausgeschnitten, die nach Einschieben der Spannhülse 22 in den Kragen 121 nach innen ausgedrückt und umgebogen werden können, um so den Radialflansch 222 der Spannhülse 22 an der radialen Ringschulter des Ringabsatzes 122 anzupresesn.

Die auf der vom Kommutator 11 abgekehrten Stirnseite des Lagerelements 14 sitzende Schleuderscheibe 16 wird durch die Axialsicherung 18 auf der Rotorwelle 10 gegen Axialverschiebung festgelegt, wobei gleichzeitig ihr erforderliches Axialspiel eingestellt wird. Die Axialsicherung 18 ist hier als Schlitzhülse 28 aus Federstahl mit einem längsdurchgehenden Schlitz 29 ausgebildet, deren Innendurchmesser kleiner ist als der Außendurchmesser der Rotorwelle 10.

Wie in Fig. 3 dargestellt ist, wird zum Aufschieben der Schlitzhülse 28 auf die Rotorwelle 10 diese in eine Spezialzange 30 eingespannt, wobei durch Zusammendrücken der Zangenbacken ein Spreizkeil 301 in den Schlitz 29 der Schlitzhülse 28 eindringt und diese aufweitet, so daß deren Innendurchmesser größer wird als der Außendurchmesser der Rotorwelle 10. In Fig. 3 ist die Schlitzhülse 28 im aufgeweiteten Zustand dargestellt. Die Form der Schlitzhülse 28 nach Entfernen der Spezialzange 30 ist dagegen strichliniert eingezeichnet. Die Schlitzhülse 28 wird in diesem aufgeweiteten Zustand auf die Rotorwelle 10 aufgeschoben und klemmt sich nach Entfernen der Spezialzange 30 auf der Rotorwelle 10 auf. Zur Verbesserung der Schmierparameter im Gleitlager 13 sind die Innenfläche des Klemmkäfigs 21, mit Ausnahme des am Lagerelement 14 anliegenden Bereichs, und die von dem Klemmkäfig 21 nicht abgedeckten Innenfläche der Spannhülse 22 mit einer Permawick- oder Mikrozellafüllung beschichtet, die durch einen Schleudervorgang mit hoher Drehzahl gleichmäßig verteilt wird.

Die Montage des Gleitlagers 13 wird wie folgt durchgeführt:

In den Klemmkäfig 21 wird die Schleuderscheibe 15 und das Lagerelement 14 eingesetzt. In die Spannhülse 22 wird die Schleuderscheibe 16 eingesetzt, und die Spannhülse 22 wird auf den Klemmkäfig 21 soweit aufgeschoben, bis das Lagerelement 14 mit einer ausreichenden Einspannkraft im Klemmkäfig 21 festgelegt ist. Ist dieses Aufschiebemaß erreicht, so wird mit einem Werkzeug die Einschnürung 26 in der Spannhülse 22 vorgenommen. Damit ist die Lagerkapsel 17 fertig montiert und wird nunmehr auf die Rotorwelle 10 aufgeschoben, bis die Schleuderscheibe 15 an der Stirnseite des Kommutators 11 anliegt. Zur Axialspieleinstellung wird eine gabelförmige Montagelehre mit einer definierten Stärke (ca. 0.03 bis 0,2 mm) zwischen Schleuderscheibe 15 und Stirnseite des Kommutators 11 eingeschoben, die nach Montageende wieder entfernt wird. Danach wird die mittels Spezialzange 30 aufgespreizte Schlitzhülse 28 auf die Rotorwelle 10 bis zum Anschlag an die Schleuderscheibe 16 aufgeschoben und dann die Spezialwerkzange 30 entfernt. Da die Schleuderscheiben 15,16, wie bereits erwähnt, einen Innendurchmesser haben. der geringfügig kleiner ist als der Außendurchmesser der Rotorwelle 10, werden die Schleuderscheiben 15,16 im Betrieb des Motors als drehende Teile von der Rotorwelle 10 mitgenommen und dichten gegenüber der Rotorwelle 10 ab, so daß das zwischen den Gleitflächen von Lagerelement 14 und Rotorwelle 10 vorhandene Schmieröl nicht längs der Rotorwelle 10 aus dem Gleitlager 13 austreten und den Kommutator 11 verunreinigen kann. In Einzelfällen kann noch eine formschlüssige Drehverbindung zwischen der Schleuderscheibe 15 und dem Kommutator 11 sowie der Schleuderscheibe 16 und der Schlitzhülse 28 realisiert werden. Das von den Schleuderscheiben 15,16 geschleudert Schmieröl bleibt innerhalb der Lagerkapsel 17 und kommt durch die Kapillarität der Permawick- oder Mikrozellamasse 31 zurück zu dem Lagerelement 14. Dabei kann infolge der Schleuderscheiben 15.16 kein Schmieröl aus der Lagerkapsel 17 austreten.

## Patentansprüche

1. Elektrokleinmotor, insbesondere Kommutatormotor, mit einer Rotorwelle (10) mit mindestens einem Lagerschild (12) und mit einem zwischen Rotorwelle (10) und Lagerschild (12) angeordneten Gleitlager (13), das ein die Rotorwelle (10) mit Lagerspiel aufnehmendes, radial und axial unverschieblich fixiertes Lagerelement (14), eine axial und radial unverschieblich fixierte mehrteilige Lagerkapsel (17), deren beide topfartigen Kapselhälften (171, 172) mit je einer im Topfboden der Kapselhälften (171, 172) ausgeschnittenen Wellendurchtrittsöffnung (19, 20) über die Rotorwelle (10) geschoben sind und das Lagerelement (14) von dessen beiden Stirnseiten her übergreifen, und mindestens eine auf der Rotorwelle (10) drehfest sitzende Schleuderscheibe (15, 16) aufweist, die zur Vermeidung von Schmiermittelaustritt aus der Lagerkapsel (17) in die Wellendurchtrittsöffnung (19, 20) einer Kapselhälfte (171, 172) hineinragt, und wobei das Lagerelement (14) unmittelbar an der Lagerkapsel (17) und die Lagerkapsel (17) am Lagerschild (12) festgelegt ist, wobei die beiden Kapselhälften (171, 172) kraftschlüssig aufeinander aufgeschoben sind und die äußere Kapselhälfte (172) am Lagerschild (12) befestigt ist, **dadurch gekennzeichnet, dass** ausschließlich die innere Kapselhälfte (171) das Lagerelement (14) auf unmittelbare Weise und zumindest kraftschlüssig aufnimmt, und dass die beiden Kapselhälften sowohl kraft als auch formschlüssig auf einander geschoben sind.

2. Motor nach Anspruch 1, **dadurch gekennzeichnet, daß** die innere Kapselhälfte (171) als ein am Umfang des Lagerelements (14) aufliegender Klemmkäfig (21) und die äußere Kapselhälfte (172) als eine den Klemmkäfig kraftschlüssig an das Lagerelement (14) andrückende Spannhülse (22) ausgebildet ist.

3. Motor nach Anspruch 2, **dadurch gekennzeichnet, daß** der Klemmkäfig (21) aus federelastischem Material, vorzugsweise Federblech, gefertigt und durch von seinem Topfrand ausgehende, axiale Einschnitte (25) gebildete, federnde Zungen (24) aufweist, die kraftschlüssig auf dem Lagerelement (14) aufliegen, und daß die Spannhülse (22) eine nahe ihrem Topfboden ausgebildeten, sich konisch verjüngenden Spannbereich (221) aufweist, der sich beim Aufschieben der Spannhülse (22) auf den Klemmkäfig (21) über die Zungenenden (242) schiebt.

4. Motor nach Anspruch 3, **dadurch gekennzeichnet, daß** das Lagerelement (14) Kalottenform aufweist, daß in der Zylinderwand des Klemmkäfigs (21) eine umlaufende Ringmulde (23) nach außen so ausgeprägt ist, daß ihre radiale Mitten- oder Symmetrieebene mit der des kalottenförmigen Lagerelements (14) in etwa zusammenfällt, und daß der Zungengrund (241) der federnden Zungen (24) etwa in der radialen Mittenoder Symmetrieebene der Ringmulde (23) liegt.

5. Motor nach Anspruch 3 oder 4, **dadurch gekennzeichnet, daß** die Zungenenden (241) der federnden Zungen (24) nach außen ausgebogen sind und daß der Durchmesser eines von den ausgebogenen Zungenenden (242) definierten Außenkreises etwa gleich dem Außendurchmesser des Klemmkäfigs (21) im Bereich der Ringmulde (23) ist.

6. Motor nach Anspruch 4 oder 5, **dadurch gekennzeichnet, daß** der Innendurchmesser der Spannhülse (22) etwa gleich dem Außendurchmesser des Klemmkäfigs (21) im Bereich der Ringmulde (23) bemessen ist.

7. Motor nach einem der Ansprüche 4 - 6, **dadurch gekennzeichnet, daß** die auf den Klemmkäfig (21) aufgeschobene Spannhülse (22) in ihrem in Aufschieberichtung hinter der Ringmulde (23) im Klemmkäfig (21) liegenden Bereich so eingeschürt ist, daß sie an der in Aufschieberichtung der Spannhülse (22) rückwärtigen Außenflanke der Ringmulde (23) im wesentlich formschlüssig anliegt.

8. Motor nach einem der Ansprüche 1 - 7, **dadurch gekennzeichnet, daß** der Schleuderscheibe (16) eine auf der Rotorwelle (10) festgesetzte Axialsicherung (18) zugeordnet ist, die ein Axialspiel zwischen Schleuderscheibe (15,16) und Lagerelement (14) festlegt.

9. Motor nach Anspruch 8, **dadurch gekennzeichnet, daß** die Axialsicherung (18) von einer Schlitzhülse (28), vorzugsweise aus Federstahl, mit einem längsdurchgehenden Schlitz (29) und mit einem Innendurchmesser, der kleiner ist als der Außendurchmesser der Rotorwelle (10), gebildet ist. die durch Aufspreizen auf die Rotorwelle (10) aufschiebbar ist.

10. Motor nach einem der Ansprüche 2 - 9, **dadurch gekennzeichnet, daß** an jeder Stirnseite des Lagerelements (14) eine Schleuderscheibe (15,16) angeordnet ist. die einen Innendurchmesser, der wenig kleiner ist als der Außendurchmesser der Rotorwelle (10) und einen gestuften Außendurchmesser aufweist. wobei der Schleuderscheibenabschnitt mit dem größten Außendurchmesser dem Lagerelement (14) nächstliegend ist, und daß der lichte Durchmesser der Wellendurchtrittsöffnungen (19,20) in den Topfböden von Klemmkäfig (21) und Spannhülse (22) kleiner als der größte Außendurchmesser der Schleuderscheiben (15,16) und größer als der kleinste Außendurchmesser der Schleuderscheiben (15,16) bemessen ist.

11. Motor nach Anspruch 10, **dadurch gekennzeichnet, daß** die eine Schleuderscheibe (15) unmittelbar vor einem mit der Rotorwelle (13) drehfest verbundenen Kommutator (11) sitzt und die Schlitzhülse (18) unmittelbar vor der anderen Schleuderscheibe (16) so auf der Rotorwelle (10) festgesetzt ist, daß zwischen den Schleuderscheiben (15,16) und dem Lagerelement (14) ein vorgegebenes Axialspiel verbleibt.

12. Motor nach einem der Ansprüche 1 - 11, **dadurch gekennzeichnet, daß** auf die Innenfläche des Klemmkäfigs (21), mit Ausnahme des am Lagerelement (14) anliegenden Bereichs, und auf dem von dem Klemmkäfig (21) nicht überdeckten Bereich der Innenfläche der Spannhülse (22) eine Permawick- oder Mikrozellafüllung (31) aufgebracht ist.

13. Motor nach einem der Ansprüche 2 - 12, **dadurch gekennzeichnet, daß** der Lagerschild (12) einen zentralen Zentrierkragen (121) aufweist, dessen lichter Durchmesser dem Außendurchmesser der Spannhülse (22) entspricht, daß an dem vom freien Ende des Zentrierkragens (121) abgekehrten Ende ein Ringabsatz (122) mit größerem lichten Durchmesser vorgesehen ist, in dessen Zylinderwand über den Umfang verteilt angeordnete Haltelappen (27) freigestanzt sind, daß die Spannhülse (22) an ihrem Topfrand einen Radialflansch (222) trägt, dessen Außendurchmesser kleiner ist als der Innendurchmesser des Ringabsatzes (122), und daß der Radialflansch (222) der in den Zentrierkragen (121) eingeschobenen Spannhülse (22) durch radiales Ausbiegen der Haltelappen (27) im Ringabsatz (122) an der radialen Ringfläche des Ringabsatzes (122) kraftschlüssig festlegbar ist.

14. Verfahren zur Montage eines Gleitlagers (13) auf einer Rotorwelle (10) eines Kommutatormotors, das ein die Rotorwelle (10) mit Lagerspiel aufnehmendes Lagerelement (14), eine aus einer topfartigen inneren (171) und einer topfartigen äußeren Kapselhälfte (172) gebildete Lagerkapsel (17) und mindestens eine auf der Rotorwelle (10) drehfest sitzende Schleuderscheibe (15, 16) aufweist, **dadurch gekennzeichnet, dass** die Schleuderscheibe (15) und das Lagerelement (14) in die als Klemmkäfig (21) mit federnden Zungen (24) ausgebildete innere Kapselhälfte (171) eingesetzt werden, dass eine weitere Schleuderscheibe (16) in die als Spannhülse (22) ausgebildete äußere Kapselhälfte (172) eingesetzt wird, dass die Spannhülse (22) auf den Klemmkäfig (21) aufgeschoben wird, bis ein Spannbereich (221) der Spannhülse (22) sich über die Zungenenden (242) der Zungen (24) schiebt, wobei das Aufschiebemaß durch die gewünschte Spannkraft der Zungen (24) am Lagerelement (14) bestimmt ist, dass die Spannhülse (22) in ihrem in Aufschieberichtung hinter einer Ringmulde (23) im Klemmkäfig (21) liegenden Bereich mittels eines Werkzeugs so eingeschnürt wird, dass hier die Spannhülse (22) im wesentlichen formschlüssig an der in Aufschieberichtung rückwärtigen Außenfläche der Ringmulde (23) im Klemmkäfig (21) anliegt, wobei ausschlieβlich die innere Kapselhälfte (171) der Lagerelement (14) auf unmittelbare weise aufnimmt, dass die so vormontierte Baueinheit auf die Rotorwelle (10) aufgeschoben wird, bis die eine Schleuderscheibe (15) unter Einhaltung eines vorgegebenen Axialspiels zum Lagerelement (14) an der Stirnseite des Kommutators (11) anliegt, und dass eine Schlitzhülse (28) mittels einer Spezialzange (30) aufgespreizt und auf die Rotorwelle (10) bis zur Anlage an der weiteren Schleuderscheibe (16) aufgeschoben und deren Spreizung durch Entfernen der Spezialzange (30) wieder aufgehoben wird.

15. Verfahren nach Anspruch 14, **dadurch gekennzeichnet, daß** zur Einstellung des Axialspiels beim Aufschieben der Baueinheit auf die Rotorwelle (13) zwischen der einen Schleuderscheibe (15) und dem Kommutator (14) eine gabelförmige Montagelehre eingeschoben wird, die nach dem Festsetzen der Schlitzhülse (28) auf der Rotorwelle (10) wieder entfernt wird.

## Claims

1. Fractional horsepower electric motor, in particular a commutator motor, with a rotor shaft (10) with at least one bearing plate (12) and with a sliding bearing (13), which is arranged between the rotor shaft (10) and the bearing plate (12) and has a bearing element (14), which receives the rotor shaft (10) with bearing play and is fixed in a radially and axially undisplaceable manner, a multi-part bearing capsule (17), which is fixed in an axially and radially undisplaceable manner and the two pot-like capsule halves (171, 172) of which have been pushed, each with a shaft through-opening (19, 20) cut out in the pot base of the capsule halves (171, 172), over the rotor shaft (10) and reach over the bearing element (14) from the two end faces of the latter, and has at least one slinger disc (15, 16), which is mounted in a rotationally fixed manner on the rotor shaft (10) and, to avoid lubricant leaking out from the bearing capsule (17), protrudes into the shaft through-opening (19, 20) of a capsule half (171, 172), and the bearing element (14) being fixed directly on the bearing capsule (17) and the bearing capsule (17) being fixed on the bearing plate (12), the two capsule halves (171, 172) having been pushed one onto the other with non-positive engagement and the outer capsule half (172) being fastened on the bearing plate (12), **characterized in that** exclusively the inner capsule half (171) receives the bearing element (14) in an indirect way and at least with non-frictional engagement, and **in that** the two capsule halves have been pushed one onto the other with both non-positive and positive engagement.

2. Motor according to Claim 1, **characterized in that** the inner capsule half (171) is designed as a clamping cage (21) resting on the circumference of the bearing element (14) and the outer capsule half (172) is designed as a clamping sleeve (22) pressing the clamping cage against the bearing element (14) with non-positive engagement.

3. Motor according to Claim 2, **characterized in that** the clamping cage (21) is produced from resilient material, preferably spring plate, and has resilient tongues (24), which are formed by axial incisions (25) extending from its pot rim and rest with non-positive engagement on the bearing element (14), and **in that** the clamping sleeve (22) has a conically tapering clamping region (221), which is formed near its pot base and is pushed over the tongue ends (242) when the clamping sleeve (22) is pushed onto the clamping cage (21).

4. Motor according to Claim 3, **characterized in that** the bearing element (14) has a hemispherical shape, **in that** a peripheral annular depression (23) is impressed in the cylinder wall of the clamping cage (21) outwards in such a way that its radial centre plane or plane of symmetry coincides approximately with that of the hemispherical bearing element (14), and **in that** the tongue root (241) of the resilient tongues (44) lies approximately in the radial centre plane or plane of symmetry of the annular depression (23).

5. Motor according to Claim 3 or 4, **characterized in that** the tongue ends (241) of the resilient tongues (24) have been bent outwards and **in that** the diameter of an outer circle defined by the bent-out tongue ends (242) is approximately equal to the outside diameter of the clamping cage (21) in the region of the annular depression (23).

6. Motor according to Claim 4 or 5, **characterized in that** the inside diameter of the clamping sleeve (22) is dimensioned such that it is approximately equal to the outside diameter of the clamping cage (21) in the region of the annular depression (23).

7. Motor according to one of Claims 4 - 6, **characterized in that** the clamping sleeve (22) pushed onto the clamping cage (21) is constricted in its region lying behind the annular depression (23), in the pushing-on direction, in the clamping cage (21) to such an extent that it bears essentially with positive engagement against the outer flank of the annular depression (23) at the rear in the pushing-on direction of the clamping sleeve (22).

8. Motor according to one of Claims 1 - 7, **characterized in that** the slinger disc (16) is assigned an axial securement (18), which is securely mounted on the rotor shaft (10) and fixes an axial play between the slinger disc (15, 16) and the bearing element (14).

9. Motor according to Claim 8, **characterized in that** the axial securement (18) is formed by a slit sleeve (28), preferably of spring steel, with a longitudinally continuous slit (29) and with an inside diameter which is smaller than the outside diameter of the rotor shaft (10), which sleeve can be pushed onto the rotor shaft (10) by spreading it open.

10. Motor according to one of Claims 2 - 9, **characterized in that** a slinger disc (15, 16) is arranged on each end face of the bearing element (14) and has an inside diameter which is little smaller than the outside diameter of the rotor shaft (10) and a stepped outside diameter, the slinger disc portion with the largest outside diameter lying closest to the bearing element (14), and **in that** the clear diameter of the shaft through-openings (19, 20) in the pot bases of the clamping cage (31) and the clamping sleeve (22) is dimensioned such that it is smaller than the largest outside diameter of the slinger discs (15, 16) and larger than the smallest outside diameter of the slinger discs (15, 16)

11. Motor according to Claim 10, **characterized in that** the one slinger disc (15) is mounted directly in front of a commutator (11) connected in a rotationally fixed manner to the rotor shaft (13) and the slit sleeve (18) is securely mounted directly in front of the other slinger disc (16) on the rotor shaft (10) in such a way that a predetermined axial play remains between the slinger discs (15, 16) and the bearing element (14).

12. Motor according to one of Claims 1 - 11, **characterized in that** a Permawick or microcellular filling (31) has been applied to the inner surface of the clamping cage (21), with the exception of the region bearing against the bearing element (14), and on the region of the inner surface of the clamping sleeve (22) not covered by the clamping cage (21).

13. Motor according to one of Claims 2 - 12, **characterized in that** the bearing plate (12) has a central centring collar (121), the clear diameter of which corresponds to the outside diameter of the clamping sleeve (22), **in that** an annular shoulder (122) with a larger clear diameter is provided at the end remote from the free end of the centring collar (121), in the cylinder wall of which collar holding lugs (27), distributed around the circumference, have been punched free, **in that** the clamping sleeve (22) bears on its pot rim a radial flange (222), the outside diameter of which is smaller than the inside diameter of the annular shoulder (122), and **in that** the radial flange (222) of the clamping sleeve (22) pushed into the centring collar (121) can be fixed with non-positive engagement by radially bending out the holding lugs (27) in the annular shoulder (122) on the radial annular face of the annular shoulder (122).

14. Method of mounting a sliding bearing (13) on a rotor shaft (10) of a commutator motor, which has a bearing element (14) receiving the rotor shaft (10) with bearing play, a bearing capsule (17) formed by a pot-like inner capsule half (171) and a pot-like outer capsule half (172), and at least one slinger disc (15, 16) mounted in a rotationally fixed manner on the rotor shaft (10), **characterized in that** the slinger disc (15) and the bearing element (14) are inserted into the inner capsule half (171), designed as a clamping cage (21) with resilient tongues (24), **in that** a further slinger disc (16) is inserted into the outer capsule half (172), designed as a clamping sleeve (22), **in that** the clamping sleeve (22) is pushed onto the clamping cage (21) until a clamping region (221) of the clamping sleeve (22) pushes over the tongue ends (242) of the tongues (24), the amount by which it is pushed on being determined by the desired clamping force of the tongues (24) on the bearing element (14), **in that** the clamping sleeve (22) is constricted in its region lying behind an annular depression (23), in the pushing-on direction, in the clamping cage (21) by means of a tool to such an extent that here the clamping sleeve (22) bears essentially with positive engagement against the outer face of the annular depression (23) at the rear in the pushing-on direction, in the clamping cage (21), exclusively the inner capsule half (171) receiving the bearing element (14) in a direct way, **in that** the structural unit pre-assembled in this way is pushed onto the rotor shaft (10) until the one slinger disc (15) bears against the end face of the commutator (11) while maintaining a predetermined axial play with respect to the bearing element (14), and **in that** a slit sleeve (28) is spread open by means of a special gripper (30) and pushed onto the rotor shaft (10) until it comes up against the further slinger disc (16) and its spreading is discontinued again by removing the special gripper (30).

15. Method according to Claim 14, **characterized in that**, for setting the axial play when pushing the structural unit onto the rotor shaft (13), a forkshaped mounting gauge is pushed in between the one slinger disc (15) and the commutator (14) and is removed again once the slit sleeve (28) is securely mounted on the rotor shaft (10).

## Revendications

1. Petit moteur électrique, notamment moteur à collecteur, comportant un arbre de rotor (10) avec au moins un panneau de palier (12) et un palier lisse (13) entre l'arbre de rotor (10) et le panneau de palier (12), ce palier lisse comprenant un élément de palier (14) recevant l'arbre de rotor (10) avec du jeu de palier, cet élément étant bloqué radialement et axialement, une capsule de palier (17) en plusieurs parties, fixée axialement et radialement, et dont les moitiés de capsule (171, 172) en forme de pots, sont glissées sur l'arbre de rotor (10) passant chaque fois à travers un orifice de passage d'arbre (19, 20) découpé dans le fond en forme de pot des moitiés de capsule (171, 172), et entoure l'élément de palier (14) par ses deux faces frontales, et le palier lisse comprenant au moins un disque d'éjection (15, 16) solidaire en rotation de l'arbre de rotor (10), pour éviter la sortie d'agent lubrifiant de la capsule de palier (17), ces disques pénétrant dans l'orifice de passage d'arbre (19, 20) d'une moitié de capsule (171, 172), alors que l'élément de palier (14) est fixé directement contre la capsule de palier (17) et que la capsule (17) est fixée au panneau de palier (12), les deux moitiés de capsule (171, 172) étant engagées l'une sur l'autre par une liaison par la force, avec la moitié de capsule extérieure (172) fixée au panneau de palier (12),
**caractérisé en ce qu'**
uniquement la moitié de capsule intérieure (171) reçoit l'élément de palier (14) d'une manière directe et au moins par une liaison par la force, et les deux moitiés de capsule sont glissées l'une sur l'autre à la fois par une liaison par la force et par une liaison par la forme.

2. Moteur selon la revendication 1,
**caractérisé en ce que**
la moitié intérieure de la capsule (171) est réalisée sous la forme d'une cage de serrage (21) appliquée contre la périphérie de l'élément de palier (14) et la moitié extérieure (172) de la capsule est réalisée sous la forme d'un manchon de serrage (22) appliquant la cage de serrage par une liaison par la force contre l'élément de palier (14).

3. Moteur selon la revendication 2,
**caractérisé en ce que**
la cage de serrage (21) est en matière élastique notamment en tôle élastique et elle comporte des languettes élastiques (24) formées par des encoches axiales (25) partant du bord du pot, ces languettes s'appuyant par une liaison par la force sur l'élément de palier (14) et le manchon de serrage (22) comporte une zone de serrage (221) qui se rétrécit suivant une forme conique à proximité de son fond de pot, cette zone de serrage se glissant par-dessus les extrémités de languette (242) lorsque le manchon de serrage (22) est glissé sur la cage de serrage (21).

4. Moteur selon la revendication 3,
**caractérisé en ce que**
l'élément de palier (14) est en forme de calotte, et la paroi cylindrique de la cage de serrage (21) comporte une goulotte annulaire (23) périphérique, déformée vers l'extérieur et son plan médian ou plan de symétrie radial avec lequel coïncide sensiblement l'élément de palier (14) en forme de calotte, et le fond (241) des languettes élastiques (24) se situe sensiblement dans le plan médian radial ou plan de symétrie de la goulotte annulaire (23).

5. Moteur selon la revendication 3 ou 4,
**caractérisé en ce que**
les extrémités (241) des languettes élastiques (24) sont recourbées vers l'extérieur et le diamètre du cercle extérieur défini par les extrémités de languette (242) recourbées vers l'extérieur est sensiblement égal au diamètre extérieur de la cage de serrage (21) au niveau de la goulotte annulaire (23).

6. Moteur selon les revendications 4 ou 5,
**caractérisé en ce que**
le diamètre intérieur du manchon de serrage (22) est sensiblement égal au diamètre extérieur de la cage de serrage (21) au niveau de la goulotte annulaire (23).

7. Moteur selon l'une quelconque des revendications 4 à 6,
**caractérisé en ce que**
le manchon de serrage (22) glissé sur la cage de serrage (21) est rétréci dans la zone située derrière la goulotte annulaire (23) de la cage de serrage (21), dans le sens de son emmanchement, de façon à s'appliquer essentiellement par une liaison de forme contre le flanc extérieur arrière de la goulotte annulaire (23) dans le sens d'emmanchement du manchon de serrage (22).

8. Moteur selon l'une quelconque des revendications 1 à 7,
**caractérisé en ce que**
le disque d'éjection (16) comporte une fixation axiale (18) rapportée solidairement sur l'arbre de rotor (10) et qui fixe le jeu axial entre le disque d'éjection (15, 16) et l'élément de palier (14).

9. Moteur selon la revendication 8,
**caractérisé en ce que**
la fixation axiale (18) est constituée par un manchon fendu (28) de préférence en acier élastique avec une fente (29) longitudinale continue et un diamètre intérieur inférieur au diamètre extérieur de l'arbre de rotor (10), ce manchon étant ouvert pour se glisser sur l'arbre de rotor (10).

10. Moteur selon l'une quelconque des revendications 2 à 9,
**caractérisé en ce que**
chaque face frontale de l'élément de palier (14) comporte un disque d'éjection (15, 16) ayant un diamètre intérieur légèrement inférieur au diamètre extérieur de l'arbre de rotor (10) et un diamètre extérieur étagé, le segment de disque d'éjection de plus grand diamètre extérieur étant situé du côté de l'élément de palier (14), et le diamètre libre des orifices de passage d'arbre (19, 20) des fonds de pot de la cage de serrage (21) et du manchon de serrage (22) étant inférieur au plus grand diamètre des disques d'éjection (15, 16) et supérieur au plus petit diamètre extérieur des disques d'éjection (15, 16).

11. Moteur selon la revendication 10,
**caractérisé en ce qu'**
un disque d'éjection (15) est installé directement devant le collecteur (11) solidairement en rotation avec l'arbre de rotor (13) et le manchon fendu (18) est fixé directement devant l'autre disque d'éjection (16) sur l'arbre (10) du rotor de façon à laisser un jeu axial prédéterminé entre les disques d'éjection (15, 16) et l'élément de palier (14).

12. Moteur selon l'une quelconque des revendications 1 à 11,
**caractérisé en ce que**
la surface intérieure de la cage de serrage (21), à l'exception de la zone appliquée contre l'élément de palier (14) et de la zone non recouverte par la cage de serrage (21) de la surface intérieure du manchon de serrage (22) est munie d'un remplissage de Permawick ou microcellulaire (31).

13. Moteur selon l'une quelconque des revendications 2 à 12,
**caractérisé en ce que**
le panneau de palier (12) comporte une collerette de centrage centrale (121) dont le diamètre libre correspond au diamètre extérieur du manchon de serrage (22) et l'extrémité à l'opposé de l'extrémité libre de la collerette de centrage (121) comporte un décrochement annulaire (122) de grand diamètre libre et dont la paroi cylindrique comporte les pattes de fixation (27) réparties à la périphérie, ces pattes étant dégagées par matriçage et le manchon de serrage (22) porte au niveau du bord du pot, une bride radiale (222) dont le diamètre extérieur est inférieur au diamètre intérieur de la collerette annulaire (122), et la bride radiale (222) du manchon de serrage (22) glissée dans la collerette de centrage (121) est fixée par déformation radiale des pattes de fixation (27) de la collerette annulaire (122) dans la surface annulaire radiale de la collerette annulaire (122) par une liaison par la force.

14. Procédé de montage d'un palier lisse (13) sur un arbre de rotor (10) d'un moteur à collecteur comprenant un élément de palier (14) recevant l'arbre de rotor (10) avec du jeu de palier, une capsule de palier (17) formée d'une moitié de capsule intérieure (171) en forme de pot et d'une moitié de capsule extérieure (172) en forme de pot et d'au moins un disque d'éjection (15, 16) porté solidairement en rotation par l'arbre de rotor (10),
**caractérisé en ce qu'**
on monte le disque d'éjection (15) et l'élément de palier (14) dans la moitié de capsule intérieure (171) en forme de cage de serrage (21) munie de languettes élastiques (24),
on place un autre disque d'éjection (16) dans la moitié de capsule extérieure (172) réalisée comme manchon de serrage (22),
on glisse le manchon de serrage (22) sur la cage de serrage (21) jusqu'à ce qu'une zone de serrage (221) du manchon de serrage (22) se glisse par-dessus les extrémités (242) des languettes (24), le degré d'emmanchement définissant la force de serrage souhaitée des languettes (24) contre l'élément de palier (14),
on rétrécit le manchon de serrage (22) dans une zone située derrière une goulotte annulaire (23) de la cage de serrage (21), dans le sens de l'emmanchement à l'aide d'un outil pour que le manchon de serrage (22) s'applique essentiellement par une liaison de forme contre la surface extérieure arrière de la goulotte annulaire (23), dans le sens de l'emmanchement, dans la cage de serrage (21), et exclusivement la moitié de capsule intérieure (171) reçoit l'élément de palier (14) d'une façon directe,
l'ensemble ainsi préassemblé est poussé sur l'arbre de rotor (10) jusqu'à ce que l'un des disques d'éjection (15) s'applique contre la face frontale du collecteur (11) en laissant un jeu axial prédéterminé par rapport à l'élément de palier (14), on ouvre un manchon fendu (28) à l'aide d'une pince spéciale (34) et on le glisse sur l'arbre de rotor (10) jusqu'à venir en appui contre l'autre disque d'éjection (16) et ensuite on laisse revenir en enlevant la pince spéciale (30).

15. Procédé selon la revendication 14,
**caractérisé en ce que**
pour régler le jeu axial lorsqu'on emmanche l'ensemble sur l'arbre de rotor (13), on place entre le disque d'éjection (15) et le collecteur (14), un gabarit de montage en forme de fourche que l'on enlève de nouveau après mise en place du manchon fendu (28) sur l'arbre de rotor (10).
